# EUROPÄISCHE PATENTSCHRIFT

(11) **EP 1 717 145 B1**
(45) Veröffentlichungstag und Bekanntmachung des Hinweises auf die Patenterteilung: **26.11.2008**
(21) Anmeldenummer: 06450059.8
(22) Anmeldetag: 18.04.2006
(51) Int. Cl.: B64D 17/62, B64D 25/02

(54) **Bergeeinrichtung**
Recovery device
Dispositif de récupération

(30) Priorität: 29.04.2005 AT 7432005
(43) Veröffentlichungstag der Anmeldung: 02.11.2006
(73) Patentinhaber: Ing. Neugebauer GmbH, 8055 Graz (AT)
(72) Erfinder: Neugebauer, Arnfried, 8055 Graz (AT)
(74) Vertreter: Kopecky, Helmut

(56) Entgegenhaltungen:
- DE-U1-5202005 008 24
- GB-A- 1 120 952
- US-A- 3 167 303
- US-A- 3 482 807

## Beschreibung

Die Erfindung betrifft eine Bergeeinrichtung zum Bergen eines an einer Aufziehleine an einem Flugkörper, insbesondere einem Luftfahrzeug, hängenden Objekts, insbesondere eines Fallschirmspringers.

Beim Absetzen von Fallschirmspringern wird die Aufziehleine des Fallschirms an einem Ankerseil am Flugzeug eingehängt, sodass es beim Abspringen des Fallschirmspringers zu einem automatischen Aufziehen des Fallschirms kommt. Hierbei kann es vorkommen, dass das Aufziehen des Fallschirms nicht funktioniert und der Fallschirmspringer nach dem Abspringen aus dem Flugzeug an der Aufziehleine hängen bleibt.

Zur Bereinigung einer solchen Situation ist es möglich, die Aufziehleine zu kappen, und der Fallschirmspringer löst den Notfallschirm aus. Weit sicherer ist es jedoch, den Fallschirmspringer zu bergen, und zwar durch Hochziehen wieder in das Flugzeug zu bringen. Zu diesem Zweck sind größere militärische Luftfahrzeuge oftmals mit Bergewinden ausgestattet, die es ermöglichen, den hängenden Fallschirmspringer wieder in den Laderaum zu bergen. Für kleinere Luftfahrzeuge wird zur Zeit keine vergleichbare Ausrüstung am Markt angeboten. Versuche, ein hängengebliebenes Objekt zurück in ein entsprechendes Flugzeug zu bringen, wurden so ausgeführt, dass beim Bergevorgang das Bergeseil der Bergewinde an der Aufziehleine befestigt wird und sodann die Aufziehleine mit der Bergewinde ein Stück eingezogen wird, worauf es erforderlich ist, die Aufziehleine im eingezogenen Zustand zu fixieren und das Bergeseil abermals an der Aufziehleine zu befestigen, und zwar ein Stück näher zum Fallschirmspringer. Dieser Vorgang des schrittweisen Einziehens der Aufziehleine ist so lange zu wiederholen, bis der Fallschirmspringer wiederum durch die geöffnete Springertür in das Innere des Flugzeugs einsteigen kann oder ihn Kameraden erfassen können und in das Flugzeug hineinziehen können. Es handelt sich hierbei um ein schrittweises Einziehen, ähnlich dem Prusik-Verfahren beim Retten eines abgestürzten, jedoch an einem Seil hängenden Bergsteigers.

Dieses Verfahren ist umständlich und zeitraubend und durch die hierdurch verlorenen Flugminuten auch teuer. Dieses langwierige Verfahren bleibt dennoch als sogenanntes "back up" Verfahren weiterhin in Anwendung.

Die Erfindung bezweckt die Vermeidung dieser Nachteile und Schwierigkeiten und stellt sich die Aufgabe, eine Bergeeinrichtung zum Bergen eines an einer Aufziehleine an einem Flugkörper, insbesondere an einem Luftfahrzeug, hängenden Objekts, insbesondere eines Fallschirmspringers, zu schaffen, mit dem das Bergeverfahren in einer kurzen Zeitspanne und ohne umständliche Manipulationen erfolgen kann. Zudem soll eine große Sicherheit sowohl für den Fallschirmspringer als auch für die im Flugkörper befindlichen Retter durch einfach durchzuführende Handgriffe gegeben sein.

Diese Aufgabe wird gelöst durch eine an der Aufziehleine anbringbare, in eine Richtung zum Objekt entlang der Aufziehleine verschiebbare und in die Gegenrichtung an der Aufziehleine sich festklemmende Seilklemme, welche Seilklemme an einem in den Flugkörper einziehbaren Bergeseil befestigt ist und mit einem Hilfsschirm versehen ist.

Durch die Anordnung des Hilfsschirms an der Seilklemme wird diese durch den am Flugobjekt vorbeistreichenden Wind, ohne eine weitere Manipulation zu erfordern, direkt in einem Zug zum an der Aufziehleine hängenden Objekt gezogen. Das an der Seilklemme befestigte Bergeseil gelangt somit ebenfalls unmittelbar bis zu dem an der Aufziehleine hängenden Objekt, und es kann dann die Bergung in einem durchgeführt werden, da bei einer Zugbelastung des Bergeseils sich die Seilklemme an der Aufziehleine festklemmt, und zwar am Ende der Aufziehleine, das sich beim an der Aufziehleine hängenden Objekt befindet. Eine Mitarbeit eines an der Aufziehleine hängenden Fallschirmspringers ist nicht erforderlich, sodass die erfindungsgemäße Lösung auch für an einer Aufziehleine hängende Güter, die vom Luftfahrzeug abgeworfen werden sollen, eingesetzt werden kann.

Vorzugsweise ist am oder im Flugkörper eine Bergewinde für das Bergeseil vorgesehen, sodass das Einziehen des Bergeseils rasch und effizient durchgeführt werden kann.

Gemäß einer bevorzugten Ausführungsform ist der Hilfsschirm an der Seilklemme mit einem kurzen Verbindungsstück, insbesondere mit einer Länge von 0 cm bis 20 cm, vorzugsweise einer Länge von 5 cm bis 10 cm, befestigt.

Vorzugsweise sind sowohl das Bergeseil als auch der Hilfsschirm an der Seilklemme mittels eines lösbaren Verbindungsmittels, wie eines Schäckels oder eines Karabiners, verbunden.

Als Seilklemme wird vorzugsweise eine sogenannte Tiblockklemme eingesetzt. Es können jedoch auch beliebige andere Seilklemmen, wie sie beispielsweise im Bergsport beim Klettern Verwendung finden, eingesetzt werden.

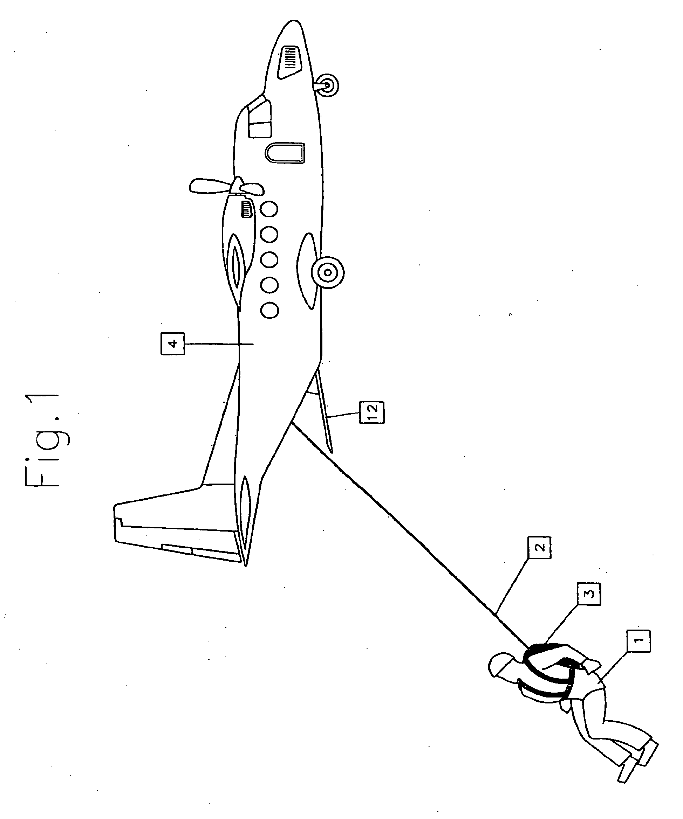

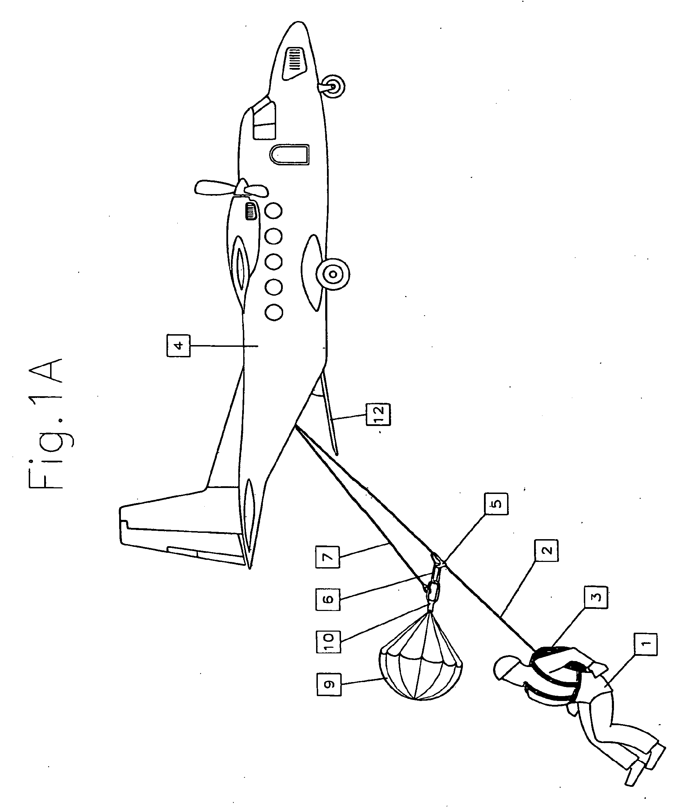

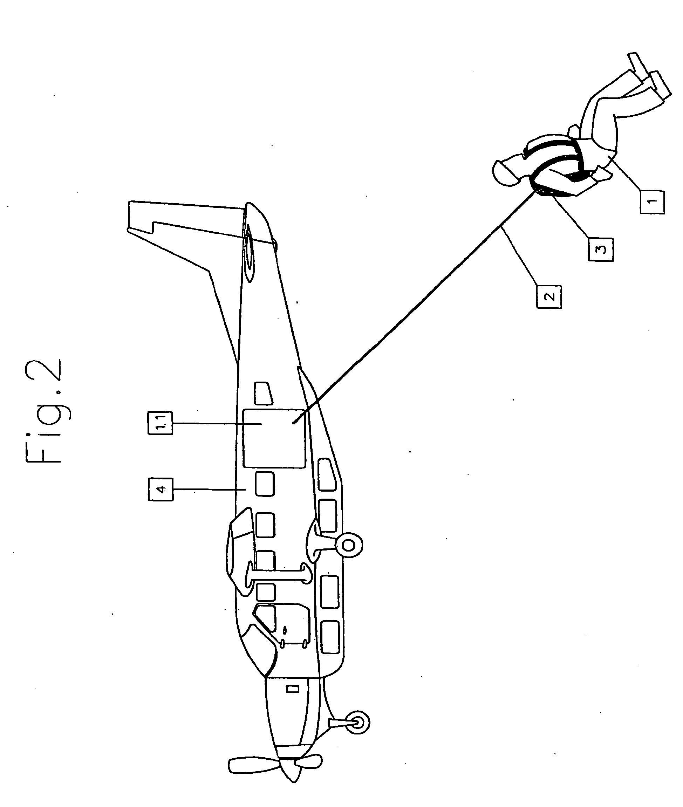

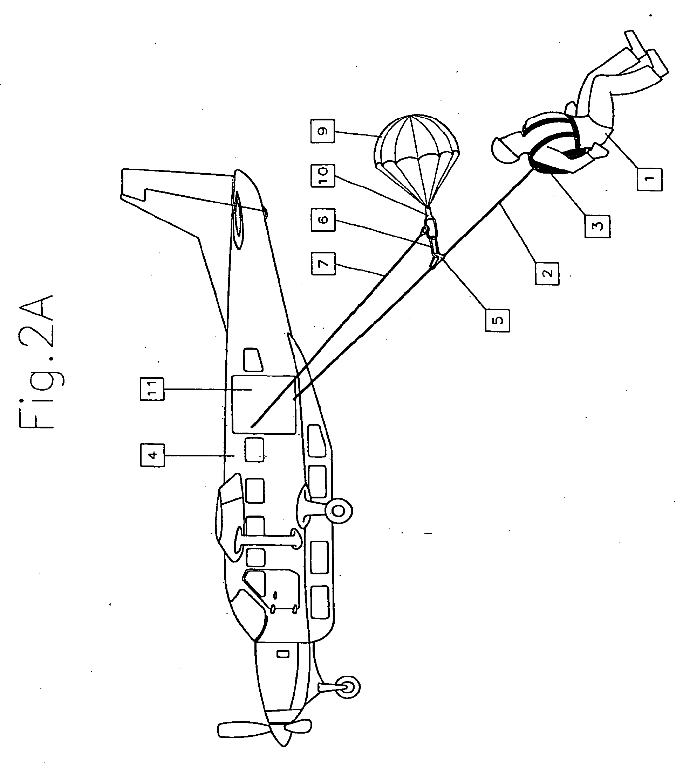

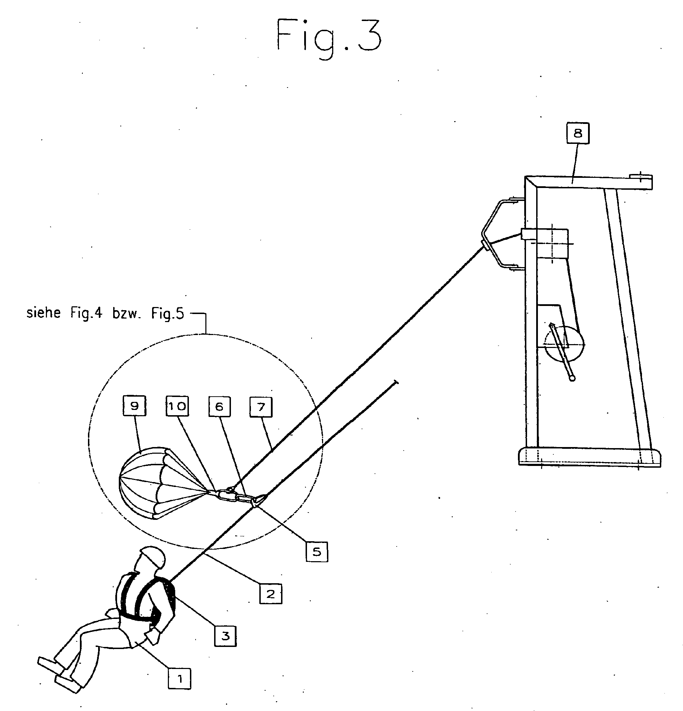

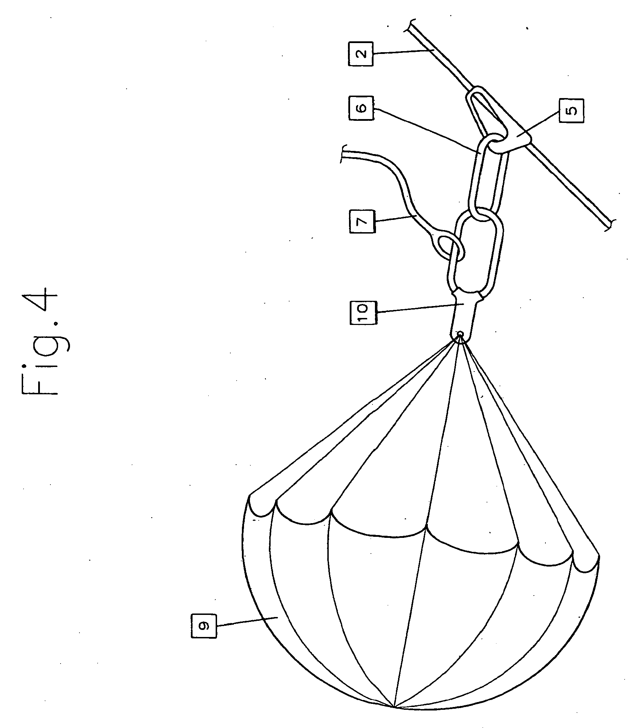

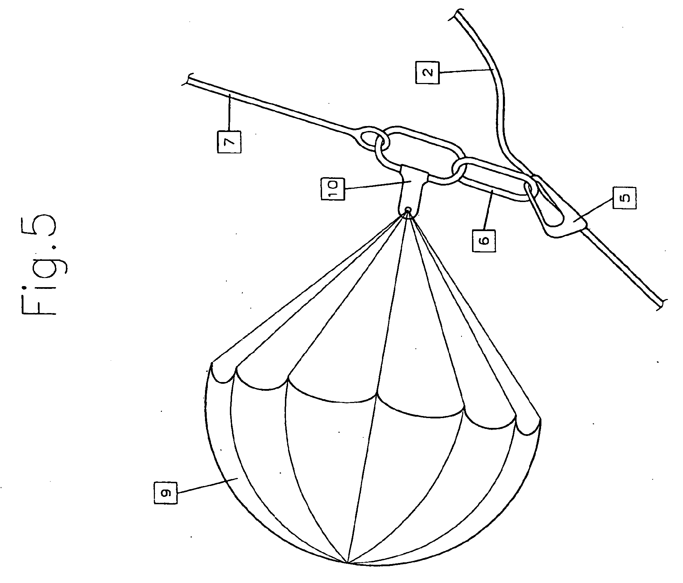

Die Erfindung ist nachfolgend anhand der Zeichnungen näher erläutert, wobei die Fig. 1 und 2 jeweils ein Luftfahrzeug mit einem an der Aufziehleine hängenden Fallschirmspringer veranschaulichen, und zwar stellt Fig. 1 ein Luftfahrzeug mit Heckrampe und Fig. 2 ein Luftfahrzeug mit Seitentüre dar. Fig. 3 zeigt die Gesamteinrichtung in schematischer Darstellung. Die Fig. 4 und 5 zeigen jeweils ein Detail A der Fig. 2 im vergrößerten Maßstab.

Wie aus den Fig. 1 und 2 zu erkennen ist, ist ein Fallschirmspringer 1 nach dem Absprung an der Aufziehleine 2 hängen geblieben, da sich sein Fallschirm 3 aus irgendeinem Grund nicht geöffnet hat. Die am Luftfahrzeug 4 vorbeiströmende Luft bewegt den Fallschirmspringer 1 in eine Lage zum hinteren Teil des Luftfahrzeugs 4 bzw. überhaupt hinter das Luftfahrzeug.

In dieser Situation wird eine Seilklemme 5 an der Aufziehleine 2 eingehängt, die sich entlang der Aufziehleine 2 zum Fallschirmspringer 1 leicht bewegen lässt, sich jedoch beim Bewegen in die Gegenrichtung an der Aufziehleine 2 festklemmt. In diese Seilklemme 5 ist über einen Karabiner 6 oder einen Schäckel oder ähnliches ein Bergeseil 7 eingehakt, das mittels einer Bergewinde 8, die sich im Luftfahrzeug 4 befindet, einziehbar ist. An der Seilklemme 5 ist weiters, entweder direkt oder über einen Karabiner, Schäckel oder ähnliches, ein Hilfsschirm 9 über ein kurzes Seil 10 befestigt, welcher Hilfsschirm 9 durch die Luftströmung veranlasst wird, sich unter Mitnahme des Bergeseils 7 und der Seilklemme 5 zum Fallschirmspringer 1 zu bewegen. Zur Unterstützung dieses Vorgangs kann es vorteilhaft sein, die Fluggeschwindigkeit des Luftfahrzeugs 4 über die Fluggeschwindigkeit, mit der beim Absetzen der Fallschirmspringer 1 geflogen wird, zu erhöhen.

Wie insbesondere aus Fig. 5 zu erkennen ist, kommt es bei einer Zugbelastung des Bergeseils 7 zu einem Klemmen der Seilklemme 5 an der Aufziehleine 2, und es kann mit dem Einziehen des Bergeseils 7 mit der Bergewinde 8 begonnen werden, wobei synchron die Aufziehleine 2 und somit der Fallschirmspringer 1 eingeholt wird. Bei Anlangen des Fallschirmspringers 1 an der Seitentüre 11 bzw. Heckklappe 12 des Luftfahrzeugs 4 klettert der Fallschirmspringer 1 in das Luftfahrzeug 4 oder er wird vom Absetzer bzw. anderen Helfern in den Laderaum des Luftfahrzeugs 4 gezogen und dort gesichert.

## Patentansprüche

1. Bergeeinrichtung zum Bergen eines an einer Aufziehleine (2) an einem Flugkörper (4), insbesondere einem Luftfahrzeug (4), hängenden Objekts (1), insbesondere eines Fallschirmspringers (1), **gekennzeichnet durch** eine an der Aufziehleine (2) anbringbare, in eine Richtung zum Objekt (1) entlang der Aufziehleine (2) verschiebbare und in die Gegenrichtung an der Aufziehleine sich festklemmende Seilklemme (5), welche Seilklemme (5) an einem in den Flugkörper (4) einziehbaren Bergeseil (7) befestigt ist und mit einem Hilfsschirm (9) versehen ist.

2. Bergeeinrichtung nach Anspruch 1, **dadurch gekennzeichnet, dass** am oder im Flugkörper (4) eine Bergewinde (8) für das Bergeseil (7) vorgesehen ist.

3. Bergeeinrichtung nach Anspruch 1 oder 2, **dadurch gekennzeichnet, dass** der Hilfsschirm (9) an der Seilklemme (5) mit einem kurzen Verbindungsstücks (10), wie einem Seil (10), insbesondere mit einer Länge von 0 cm bis 20 cm, vorzugsweise einer Länge von 5 cm bis 20 cm, befestigt ist.

4. Bergeeinrichtung nach einem der Ansprüche 1 bis 3, **dadurch gekennzeichnet, dass** sowohl das Bergeseil (7) als auch der Hilfsschirm (9) an der Seilklemme (5) mittels eines lösbaren Verbindungsmittels (6), wie eines Schäckels oder eines Karabiners (6), verbunden ist.

5. Bergeeinrichtung nach einem der Ansprüche 1 bis 4, **dadurch gekennzeichnet, dass** die Seilklemme (5) als Tiblockklemme ausgebildet ist.

## Claims

1. A recovery device for recovering an object (1), in particular a parachutist (1), attached to a rip cord (2) on a flying object (4), in particular an aircraft (4), **characterized by** a rope clamp (5) attachable to the rip cord (2), movable along the rip cord (2) in a direction toward the object (1) and clamping itself to the rip cord in the opposite direction, which rope clamp (5) is fastened to a recovery rope (7) retractable into the flying object (4) and is provided with an auxiliary parachute (9).

2. A recovery device according to claim 1, **characterized in that** a recovery winch (8) for the recovery rope (7) is provided on or in the flying object (4).

3. A recovery device according to claim 1 or 2, **characterized in that** the auxiliary parachute (9) is fastened to the rope clamp (5) with a short connecting piece (10) such as a rope (10), in particular having a length of from 0 cm to 20 cm, preferably a length of from 5 cm to 20 cm.

4. A recovery device according to any of claims 1 to 3, **characterized in that** both the recovery rope (7) and the auxiliary parachute (9) are connected on the rope clamp (5) by means of a detachable fastener (6) such as a shackle or a carabiner (6).

5. A recovery device according to any of claims 1 to 4, **characterized in that** the rope clamp (5) is designed as a tibloc clamp.

## Revendications

1. Dispositif de récupération pour récupérer un objet (1), en particulier un parachutiste (1), suspendu par une sangle d'ouverture automatique (2) à un engin volant (4), en particulier à un aéronef (4), **caractérisé par** un serre-câble susceptible d'être monté sur la sangle d'ouverture (2), capable de se déplacer le long de la sangle d'ouverture (2) en direction de l'objet (1) et de se bloquer sur la sangle d'ouverture dans la direction opposée, ledit serre-câble étant fixé à un câble de récupération (7) capable d'être rétracté dans l'engin volant (4) et doté d'un parachute auxiliaire (9).

2. Dispositif de récupération selon la revendication 1, **caractérisé en ce qu'**il est prévu dans l'engin volant (4) ou sur celui-ci, un treuil de récupération (8) pour le câble de récupération (7).

3. Dispositif de récupération selon la revendication 1 ou 2, **caractérisé en ce que** le parachute auxiliaire (9) est fixé sur le serre-câble (5) avec une courte pièce de liaison (10), comme un câble (10), en particulier avec une longueur de 0 cm à 20 cm, de préférence une longueur de 5 cm à 20 cm.

4. Dispositif de récupération selon l'une des revendications 1 à 3, **caractérisé en ce que** le câble de récupération (7) tout comme le parachute auxiliaire (9) sont reliés au serre-câble (5) à l'aide d'un moyen de liaison (6) détachable, comme une manille ou un mousqueton (6).

5. Dispositif de récupération selon l'une des revendications 1 à 4, **caractérisé en ce que** le serre-câble (5) est réalisé à la manière d'un bloqueur Tibloc.
